(19) Europäisches Patentamt
European Patent Office
Office européen des brevets

(11) **EP 3 158 703 B1**

(12) **EUROPEAN PATENT SPECIFICATION**

(45) Date of publication and mention
of the grant of the patent:
**26.06.2019 Bulletin 2019/26**

(21) Application number: **15849300.7**

(22) Date of filing: **08.10.2015**

(51) Int Cl.:
*H04J 11/00* (2006.01)    *H04W 56/00* (2009.01)
*H04W 88/08* (2009.01)    *H04W 88/02* (2009.01)
*H04L 1/08* (2006.01)    *H04L 27/26* (2006.01)
*H04L 29/06* (2006.01)

(86) International application number:
**PCT/CN2015/091456**

(87) International publication number:
**WO 2016/054999 (14.04.2016 Gazette 2016/15)**

(54) **SIGNAL FORMAT FOR CELL SEARCH AND SYNCHRONIZATION IN WIRELESS NETWORKS**

SIGNALFORMAT ZUR ZELLENSUCHE UND -SYNCHRONISIERUNG IN DRAHTLOSEN NETZWERKEN

FORMAT DE SIGNAL DE SYNCHRONISATION ET DE RECHERCHE DE CELLULE DANS DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2014 US 201462060781 P**
**29.09.2015 US 201514868665**

(43) Date of publication of application:
**26.04.2017 Bulletin 2017/17**

(73) Proprietor: **MediaTek Inc.**
**Hsin-chu City 300 (TW)**

(72) Inventor: **CHEN, Ju-Ya**
**Kaohsiung City 807 (TW)**

(74) Representative: **Habermann, Hruschka & Schnabel**
**Patentanwälte**
**Montgelasstraße 2**
**81679 München (DE)**

(56) References cited:
**EP-A2- 2 410 708      WO-A1-2006/000091**
**WO-A2-2008/024173     CN-A- 101 001 232**
**CN-A- 101 945 071     CN-A- 103 873 421**
**US-A1- 2007 025 236    US-A1- 2008 043 882**
**US-A1- 2009 175 394    US-A1- 2009 268 602**
**US-A1- 2010 316 175    US-B2- 8 134 996**

**Description**

**TECHNICAL FIELD**

The disclosed embodiments relate generally to wireless communication, and, more particularly, to signal format for cell search and synchronization in wireless networks.

**BACKGROUND**

Long Term Evolution (LTE) is an improved universal mobile telecommunication system (UMTS) that provides higher data rate, lower latency and improved system capacity. To provide high data rate in a frequency selective fading environment, the downlink transmission utilizes Orthogonal Frequency Division Multiple Access (OFDMA) at the physical layer. In an LTE system, an evolved universal terrestrial radio access network (E-UTRAN) includes a plurality of base stations, referred as evolved Node-Bs (eNBs), communicating with a plurality of mobile stations, referred as user equipment (UE). A UE may communication with a base station or an eNB via downlink and uplink.

Cell search as well as synchronization in the LTE system is performed in each UE by using both the Primary Synchronization Signal (PSS) and Secondary Synchronization Signal (SSS). The LTE wireless cellular system is designed with orthogonal frequency domain multiple access (OFDMA) in the physical layer. The incoming user data bits are multiplexed onto the assigned sub-carriers in frequency domain and transmitted as a single time-domain signal in downlink. This is accomplished by an inverse fast Fourier transform (IFFT) on the user data bits. For facilitating cell search procedures, known bit patterns are transmitted in specific time and frequency slots for the mobile devices to be able to identify the cell's timing and its associated identifier (cell ID). A mobile device after being powered on, attempts to measure the received wideband power and attempts to perform cell search using the downlink synchronization channels.

Cell search is important in cellular or wireless networks. A UE uses cell search procedure to obtain the cell identity, time/frequency/spatial synchronization, or other system/network information. The cell search procedure in LTE system can be performed in three steps. The first step is carried out by correlating the received Primary Synchronization Signal (PSS) samples to determine the cell's group identity out of three possible values and its timing information by determining the 5ms boundary of cell's signal transmission. The latter is because PSS signal is transmitted as the last OFDM symbol in 0th and 5th subframe of a 10ms radio frame. The second step is correlating the received samples of the Secondary Synchronization Signal (SSS) to determine the cell identifier and frame timing. The third step is to verify the cell identification. The cell searching time usually depends on the number of cell identities or the amount of carried system information.

The bandwidth shortage increasingly experienced by mobile carriers has motivated the exploration of the underutilized Millimeter Wave (mmWave) frequency spectrum between 3G and 300G Hz for the next generation broadband cellular communication networks. The available spectrum of mmWave band is two hundred times greater than the conventional cellular system. The mmWave wireless network uses directional communications with narrow beams and can support multi-gigabit data rate. For control purpose, a set of coarse TX/RX control beams are provisioned by a base station in the mmWave cellular system. The base station broadcasts synchronization signals in control channels with spatial-domain control beam patterns for cell search and handover applications. The synchronization signal is periodically transmitted with a small duty cycle instead of a constantly broadcasting signal.

In addition to cell identities, control beam identity information also needs to be decoded by each UE in cell search procedure for directional cellular or wireless networks. As a result, cell search time increases. A solution is sought to design a synchronization signal to reduce the cell search time in directional cellular or wireless systems.

From WO 2006/000091 A1 a preamble design for mobile broadband wireless access multiple input-multiple output, MIMO, orthogonal frequency division multiple access, OFDMA, systems is known.

From EP 2410708 A2 techniques for fast cell search, selection and reselection for wireless communication systems such as orthogonal frequency division multiplexing, OFDM, or OFDMA communication systems are known.

From US 8134996 B2 methods for downlink synchronization for a cellular OFDM communication system are known.

From WO 2008/024173 A2 and US 2008/043882 A1, respectively, a receiver that performs hybrid timing and frequency offset for processing synchronization signals in an evolved universal terrestrial radio access, E-UTRA, system is known.

From US 2007/025236 A1 a method and apparatus for performing acquisition, synchronization and cell selection within a MIMO-OFDM communication system are known.

From US 2009/175394 A1 and US 2009/268602 A1, respectively, general methods and apparatus for synchronization and detection in wireless communication systems, including OFDMA systems, are known.

## SUMMARY

The present invention is defined by the subject matter of the appended independent claims. Dependent claims constitute embodiments of the invention. Any other subject-matter outside the scope of protection of the claims is to be regarded as examples not in accordance with the invention.

Other embodiments and advantages are described in the detailed description below. This summary does not purport to define the invention. The invention is defined by the claims.

## BRIEF DESCRIPTION OF THE DRAWINGS

The accompanying drawings, where like numerals indicate like components, illustrate embodiments of the invention.

Figure 1 illustrates a beamforming mmWave mobile communication network with a novel synchronization signal format in accordance with one novel aspect.

Figure 2 is a simplified block diagram of a user equipment (UE) that carry certain embodiments of the present invention.

Figure 3 illustrates one embodiment of a two-stage cell search and synchronization in a beamforming mmWave mobile communication network.

Figure 4 illustrates a novel signal format of a synchronization signal for cell search and synchronization in a beamforming mmWave system.

Figure 5 illustrates a first stage of the cell search method based on the novel signal format.

Figure 6 illustrates a second stage of the cell search method based on the novel signal format.

Figure 7 is a flow chart of a method of a two-stage cell search based on a novel synchronization signal format in accordance with one novel aspect.

Figure 8 is a flow chart of a method of transmitting synchronization signals with a novel signal format for reduced cell search time.

## DETAILED DESCRIPTION

Reference will now be made in detail to some embodiments of the invention, examples of which are illustrated in the accompanying drawings.

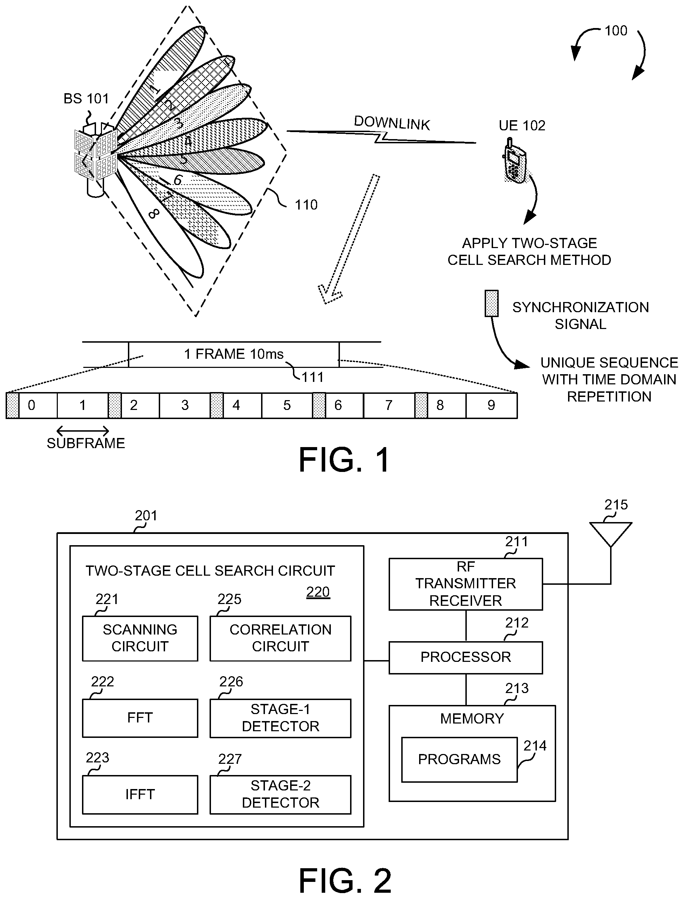

Figure 1 illustrates a beamforming mmWave mobile communication network 100 with a novel synchronization signal format in accordance with one novel aspect. Beamforming mmWave mobile communication network 100 comprises a base station BS 101 and a user equipment UE 102. The mmWave cellular network uses directional communications with narrow beams and can support multi-gigabit data rate. Directional communications are achieved via digital and/or analog beamforming, wherein multiple antenna elements are applied with multiple sets of beamforming weights to form multiple beams. For example, BS 101 is directionally configured with multiple cells, and each cell (e.g., cell 110) is covered by a set of coarse resolution control beams CB1 to CB8.

A base station (BS) broadcasts synchronization signals in control channels with spatial-domain control beam patterns for cell search and handover applications. Each control beam broadcasts minimum amount of cell-specific and beam-specific information similar to System Information Block (SIB) or Master Information Block (MIB) in LTE systems. Each control beam may also carry UE-specific control or data traffic. Each control beam transmits a set of known synchronization signals for the purpose of cell search, initial time-frequency synchronization, identification of the control beam that transmits the synchronization signals, and measurement of radio channel quality for the control beam that transmits the synchronization signals.

The cell searching time usually depends on the number of cell identities or the amount of carried system information. In LTE systems, there are 504 cell identities, which are divided into 3*168 cell groups. Cell search is performed by using both the Primary Synchronization Signal (PSS) and Secondary Synchronization Signal (SSS). The PSS gives UE information about to which of the three groups of physical layers the cell belongs. The SSS is decoded right after PSS, which defines the cell group identity directly. The hierarchical PSS/SSS structure is designed to reduce the cell search time. However, in directional mmWave networks, control beam identity information also needs to be decoded by each UE in the cell search procedure. For example, cell 110 is configured with eight control beams CB1 to CB8, and both control beam ID and cell ID need to be sent to the UE via the synchronization signal. If each cell is configured with eight control beams, then the total number of cell ID/beam ID can reach 504*8. As a result, cell search time increases.

In accordance with one novel aspect, to reduce cell search complexity and cell search time, a synchronization signal format for cell search is proposed. In the example of Figure 1, the downlink channels use Orthogonal Frequency Division Multiple Access (OFDMA). Each OFDM radio frame (e.g., frame 111) is 10ms long. Each frame is divided into ten subframes of 1ms. Subframes are also split into 0.5ms slots. Such slot can contain seven OFDM symbols with normal Cyclic Prefix (CP) length and six with extended CP (not shown). A synchronization channel is allocated periodically, for example, during the first OFDM symbol of every other subframe. The periodicity of the synchronization channel is configurable. As illustrated in Figure 1, each synchronization signal is embedded with a unique sequence that is repeated n times in time domain and then inserted in the OFDM symbol. Different unique sequence represents different control information. A two-stage cell search method is proposed in accordance with the synchronization signal format to reduce cell search time. In a first acquisition stage, a coarse location of the synchronization signal is acquired. In a second fine searching stage, the unique sequence is detected within the searching range of the coarse location.

Figure 2 is a simplified block diagram of user equipment UE 201 that carry certain embodiments of the present invention. UE 201 has an antenna array 215 with multiple antenna elements, which transmits and receives radio signals. A radio frequency (RF) transceiver module 211, coupled with the antenna, receives RF signals from antenna 214, converts them to baseband signals and sends them to processor 212. RF transceiver 211 also converts received baseband signals from processor 212, converts them to RF signals, and sends out to antenna 215. Processor 212 processes the received baseband signals and invokes different functional modules to perform features in UE 201. Memory 213 stores program instructions and data 214 to control the operations of UE 201.

UE 201 also includes function modules that carry out different tasks in accordance with embodiments of the current invention. The functional modules are circuits that can be implemented and configured by hardware, firmware, software, and any combination thereof. For example, UE 201 comprises a two-stage cell search circuit 220 that performs cell search and synchronization with a serving base station. Two-stage cell search circuit 220 further comprises a scanning circuit 221 that listens to synchronization signals during scanning intervals, a FFT circuit performs FFT on a received signal from time domain to frequency domain, an IFFT circuit performs IFFT on a received signal from frequency domain to time domain, a correlation circuit that correlates two signals (which includes both self-correlation and cross-correlation), a stage-1 detector that performs stage-1 detection of a coarse location of the synchronization signal, and a stage-2 detector that performs stage-2 detection of a fine location of the synchronization signal and detects the unique sequence embedded in the synchronization signal. Based on the fine location, UE 201 is able to synchronize to its serving base station. Furthermore, based on the unique sequence, UE 201 is able to decode the cell ID, beam ID, and other control information broadcasted by its serving base station.

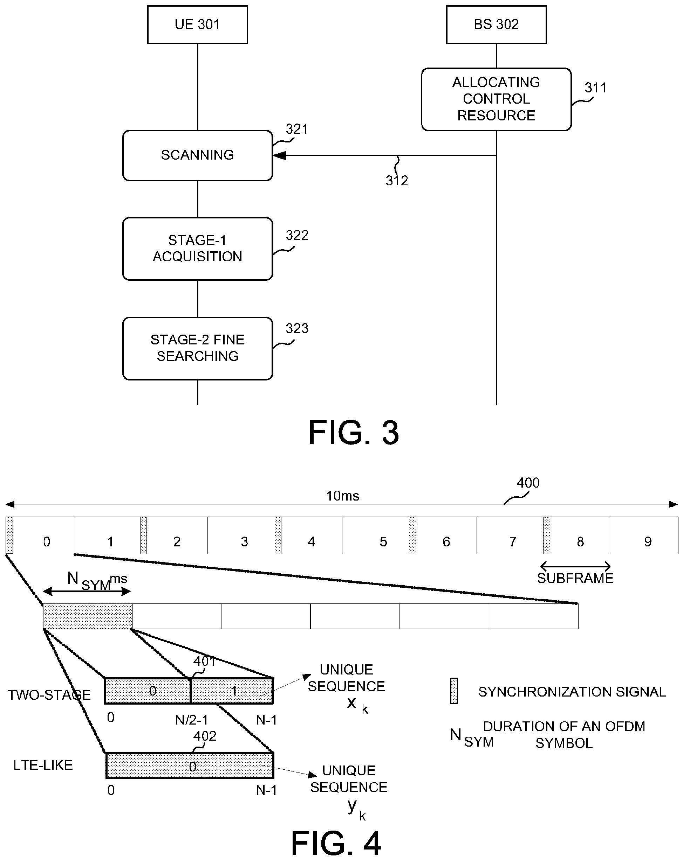

Figure 3 illustrates one embodiment of a two-stage cell search and synchronization method in a beamforming mobile communication network. The mobile communication network comprises a UE 301 and a base station BS 302. In step 311, BS 302 allocates control resources for periodically broadcasting synchronization signals to its serving UEs. In step 312, BS 302 periodically broadcasts synchronization signals over the allocated radio resources via directionally configured control beams. Control information is embedded within the synchronization signals. In step 321, UE 301 performs scanning and receives the synchronization signals during scanning intervals. In step 322, UE 301 performs a stage-1 signal detection, which is an acquisition stage. The purpose of this stage is to reduce the search time and find out the possible searching range for stage-2. In step 323, UE 301 performs stage-2 signal detection, which is a fine searching stage. During the stage-2 signal detection, the UE matches the synchronization signal to identify the embedded control information.

Figure 4 illustrates a novel signal format of a synchronization signal for cell search and synchronization in a beamforming system. As illustrated in Figure 4, each OFDM radio frame (e.g., radio frame 400) is 10ms long. Each radio frame is divided into ten subframes of 1ms. A synchronization channel is allocated periodically, for example, during the first OFDM symbol of every other subframes. The periodicity of the synchronization channel is configurable. Furthermore, the synchronization signal is embedded with a unique sequence $x_k$ that is repeated n times in time domain (e.g., n = 2, repeated twice as depicted in Figure 4). Different unique sequences represent different control information.

In one example of two-stage cell search method, the synchronization signal occupies one OFDM symbol length ($N_{sym}$ms), which contains N time-domain samples. The unique sequence $x_k$ has a length of N/2 time-domain values. The first copy of $x_k$ is inserted in the first N/2 time-domain samples of the OFDM symbol 401, and the second copy of $x_k$ is inserted in the second N/2 time-domain samples of the OFDM symbol 401. On the other hand, for LTE-like cell search method, the synchronization signal also occupies one OFDM symbol 402, which contains N time-domain samples. OFDM symbol 402 carries a unique sequence $y_k$ having a length of N, and there is no time-domain repletion for the unique sequence $y_k$. Because of the time-domain repetition of the synchronization signal in OFDM symbol 401, the proposed two-stage cell search method can be achieved as follows. In a first stage, self-correlation is applied by the receiver to find out the coarse location of synchronization signal. In a second stage, the receiver matches the unique sequence within the searching range of the coarse location to find out the control information. The complexity of the two-stage cell search method is lower than that of LTE-like cell search method.

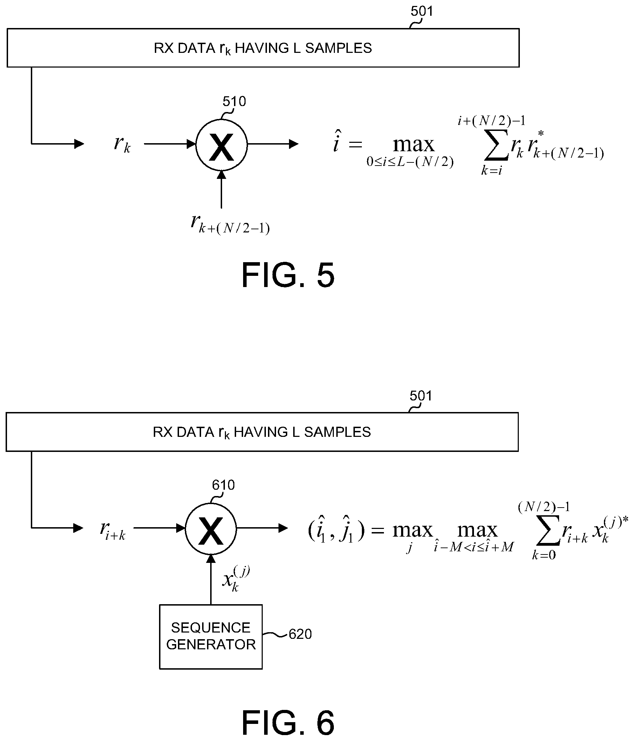

Figure 5 illustrates a first stage of the cell search method based on the novel synchronization signal format. During the first stage, a UE receives a time-domain signal 501 denoted as $r_k$ for a total of L samples during an observation window, where k indicates the sampling instance. The UE then uses a correlator 510 to perform self-correlation for the received time-domain signal $r_k$ as follows:

$$\hat{i} = \max_{0 \leq i \leq L-(N/2)} \sum_{k=i}^{i+(N/2)-1} r_k r^*_{k+(N/2-1)}$$

Where

- Received time-domain signal is denoted as $r_k$
- Length of unique sequence $x_k$ is N/2
- Length of the observation of received signal is L
- Number of multipliers is L-(N/2)+1
- Number of adders is 2L-(N/2)+2.

Based on the self-correlation result, a coarse location i can be found if a maximum correlation is reached. Note that power normalization is not shown here for simplicity. Further, maximization is not the only one approach. The coarse location can also be found if the correlation result reaches a threshold value. It can be seen that the number of computation required in such self-correlation is relatively small because the same sequence is simply shifted in time domain during the correlation. Based on the novel signal format of time-domain repetition, $r_k$ and $r_{k+(N/2-1)}$ (e.g., two sequences having a time distance of N/2) are exactly the same if $r_k$ is captured at the correct time instance i during the observation window. As a result, the self-correlation between $r_k$ and $r_{k+(N/2-1)}$ will produce a maximum result.

Figure 6 illustrates a second stage of the cell search method based on the novel synchronization signal format. During the second stage, the UE receives the same time-domain signal 501 denoted as $r_k$ for a total of L samples during an observation window, where k indicates the sampling instance. The UE then uses a correlator 610 to perform cross-correlation between the received time-domain signal $r_k$ and each of the possible unique sequences $x_k$, and then find unique sequence number ($j_1$) and fine symbol timing ($i_1$) by cross-correlation as follows:

$$(\hat{i}_1, \hat{j}_1) = \max_{j} \max_{\hat{i}-M < i \leq \hat{i}+M} \sum_{k=0}^{(N/2)-1} r_{i+k} x_k^{(j)*}$$

Where

- $x_k^{(j)}$ is jth unique sequence
- Number of unique sequence is J, which depends on number of control beam and cell ID
- Length of certain fine searching range is 2M+1
- Number of multipliers is J(2M+1)(N/2)
- Number of adders is J(2M+1)((N/2)-1).

The unique sequence number ($j_1$) is determined when a maximum cross correlation result is achieved among all candidate sequences. The searching range for the cross-correlation in stage-2 is plus or minus M sampling instances of the coarse location i determined from stage-1. As a result, the number of computation required in such cross-correlation is relatively small because of the restricted searching range of (2M+1). The number of total multipliers is L-(N/2)+1+J(2M+1)(N/2), and the number of total adders is 2L-(N/2)+2+J(2M+1)((N/2)-1). Overall, the complexity of the two-stage cell search method is much lower than the LTE-like cell search.

For LTE-like cell search, the synchronization signal contains a unique sequence $y_k$ having a length N. The unique sequence occupies an entire OFDM symbol and has no time-domain repetition. The corresponding cell-search method is to find unique sequence number ($j_2$) and fine symbol timing ($i_2$) by cross-correlation in full range as follows:

$$(\hat{i}_2, \hat{j}_2) = \max_{j} \max_{0 \leq i \leq L-N} \sum_{k=0}^{N-1} r_{i+k} y_k^{(j)*}$$

Where

- Received time-domain signal is denoted as $r_k$
- Length of unique sequence $y_k$ is N
- Length of the observation of received signal is L
- $y_k^{(j)}$ is jth unique sequence
- Number of unique sequence is J, which depends on number of control beam and cell ID
- Number of multipliers is J(L-N+1)N
- Number of adders is J(L-N+1)(N-1).

In one specific example, assume N=2048, L=286720, J=4032, and M=128. The total number of multipliers/adders in the two-stage method is $1.1*10^9$, and the total number of multipliers/adders in the LTE-like method is $2.4*10^{12}$. It can be seen that the complexity of LTE-like cell search method is 2000 times of that of the two-stage cell search method in this example.

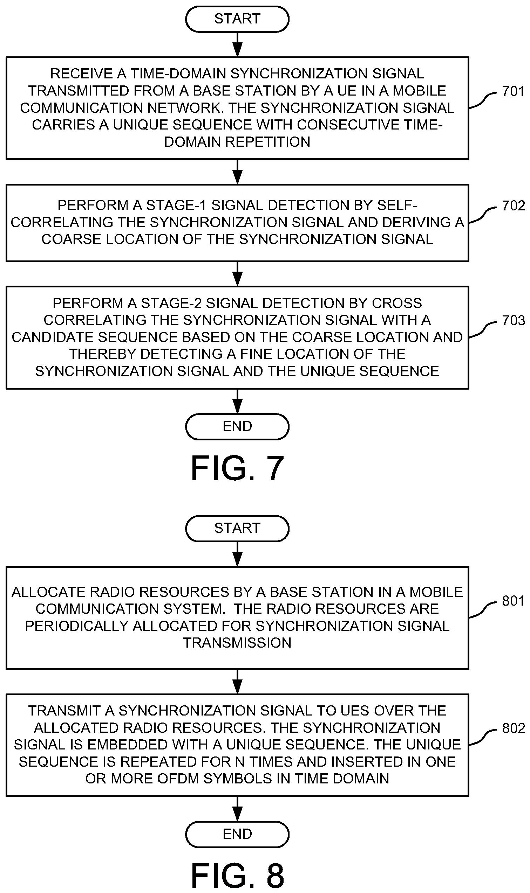

Figure 7 is a flow chart of a method of a two-stage cell search based on a novel synchronization signal format in accordance with one novel aspect. In step 701, a user equipment (UE) receives a time-domain synchronization signal transmitted from a base station in a mobile communication network. The synchronization signal carries a unique sequence with consecutive time-domain repetition. In step 702, the UE performs a stage-1 signal detection by self-correlating the synchronization signal and deriving a coarse location of the synchronization signal. In step 703, the UE performs a stage-2 signal detection by cross correlating the synchronization signal with a candidate sequence based on the coarse location and thereby detecting a fine location of the synchronization signal and the unique sequence.

Figure 8 is a flow chart of a method of transmitting synchronization signals with a novel signal format for reduced cell search time. In step 801, a base station allocates radio resources in a mobile communication network. The radio resources are periodically allocated for synchronization signal transmission. In step 802, the base station transmits a synchronization signal to a plurality of UEs over the allocated radio resources. The synchronization signal is embedded with a unique sequence. The unique sequence is repeated for n times and inserted in one or more OFDM symbols in time domain. In one example, a plurality of control beams is configured to cover an entire service area of a cell for transmitting the synchronization signal. The unique sequence identifies control information comprising at least one of a cell ID and a beam ID of the base station.

## Claims

1. A method comprising:

   receiving (701) a time-domain synchronization signal transmitted from a base station (101) by a user equipment, UE (102) in a mobile communication network (100),
   wherein a plurality of control beams is configured to cover an entire service area of a cell for transmitting the synchronization signal,
   wherein the synchronization signal carries a unique sequence with consecutive time-domain repetition, wherein the unique sequence identifies control information comprising at least one of a cell ID and a beam ID of the base station (101),
   **characterized by**
   the unique sequence having a length of N/n time-domain samples, the unique sequence being repeated for n times in one OFDM symbol, the one OFDM symbol containing N time-domain samples, and N and n being positive integers; and
   the method further comprising:

      performing (702) a stage-1 signal detection by self-correlating the synchronization signal at different sampling points with N/n time-domain samples time distance during an observation window and deriving a coarse location of the synchronization signal and the unique sequence; and
      performing (703) a stage-2 signal detection by cross-correlating the synchronization signal with each candidate sequence of a plurality of candidate sequences at sampling instances near the coarse location and thereby detecting a fine location of the synchronization signal and the unique sequence.

2. The method of Claim 1, wherein the coarse location is determined when a correlation result is higher than a predefined threshold.

3. The method of Claim 1, wherein the fine location and the unique sequence are detected when a maximum correlation result is achieved among all candidate sequences.

**4.** A user equipment, UE (102), comprising:

a receiver (211) that is adapted to receive a time-domain synchronization signal transmitted from a base station (101) in a mobile communication network (100),

wherein a plurality of control beams is configured to cover an entire service area of a cell for transmitting the synchronization signal,

wherein the synchronization signal carries a unique sequence with consecutive time-domain repetition, wherein the unique sequence is adapted to identify control information comprising at least one of a cell ID and a beam ID of the base station (101),

**characterized by**

the unique sequence having a length of N/n time-domain samples, the unique sequence being repeated for n times in one OFDM symbol, the one OFDM symbol containing N time-domain samples, and N and n being positive integers; and

the UE (102) further comprising:

a stage-1 signal detector (226) that is adapted to perform self-correlation of the synchronization signal at different sampling points with N/n time-domain samples time distance during an observation window and thereby deriving a coarse location of the synchronization signal and the unique sequence; and

a stage-2 signal detector (227) that is adapted to perform cross-correlation of the synchronization signal with each candidate sequence of a plurality of candidate sequences at sampling instances near the coarse location and thereby detecting a fine location of the synchronization signal and the unique sequence.

**5.** The UE of Claim 4, wherein the coarse location is determinable by a correlation result higher than a predefined threshold.

**6.** The UE of Claim 4, wherein the fine location and the unique sequence are detectable at a maximum correlation result among all candidate sequences.

**Patentansprüche**

**1.** Verfahren, aufweisend:

Empfangen (701) eines Zeitbereichs-Synchronisationssignals, das von einer Basisstation (101) durch ein Benutzergerät, UE (102) in einem mobilen Kommunikationsnetzwerk (100) übertragen wird,

wobei eine Vielzahl von Kontrollstrahlen konfiguriert ist, um einen gesamten Servicebereich einer Zelle zum Übertragen des Synchronisationssignals abzudecken,

wobei das Synchronisationssignal eine eindeutige Sequenz mit aufeinanderfolgender Zeitbereichswiederholung trägt, wobei die eindeutige Sequenz Kontrollinformationen identifiziert, die mindestens eine von einer Zellen-ID und einer Strahl-ID der Basisstation (101) aufweisen,

**dadurch gekennzeichnet, dass**

die einzigartige Sequenz eine Länge von N/n Zeitbereichsabtastungen aufweist, wobei die eindeutige Sequenz n-mal in einem OFDM-Symbol wiederholt wird, wobei das eine OFDM-Symbol N Zeitbereichsabtastungen enthält und N und n positive ganze Zahlen sind; und

das Verfahren ferner aufweist:

Durchführen (702) einer Stufe 1-Signalerkennung durch Selbstkorrelation des Synchronisationssignals an verschiedenen Abtastpunkten mit N/n Zeitabtastzeitabständen während eines Beobachtungsfensters und Ableiten einer groben Position des Synchronisationssignals und der eindeutigen Sequenz; und

Durchführen (703) einer Stufe 2-Signalerkennung durch Kreuzkorrelation des Synchronisationssignals mit jeder Kandidatensequenz einer Vielzahl von Kandidatensequenzen an Abtastinstanzen in der Nähe der groben Position und dadurch Erfassen einer genaueren Position des Synchronisationssignals und der eindeutigen Sequenz.

**2.** Verfahren nach Anspruch 1, bei dem die grobe Position bestimmt wird, wenn ein Korrelationsergebnis höher als ein vordefinierter Schwellenwert ist.

**3.** Verfahren nach Anspruch 1, bei dem die genauere Position und die eindeutige Sequenz erfasst werden, wenn ein maximales Korrelationsergebnis zwischen allen Kandidatensequenzen erreicht wird.

4.   Benutzergerät, UE (102), aufweisend:

einen Empfänger (211), der angepasst ist, um ein Synchronisationssignal im Zeitbereich zu empfangen, das von einer Basisstation (101) in einem mobilen Kommunikationsnetzwerk (100) übertragen wird, wobei eine Vielzahl von Kontrollstrahlen konfiguriert ist, um einen gesamten Servicebereich einer Zelle zum Übertragen des Synchronisationssignals abzudecken, wobei das Synchronisationssignal eine eindeutige Sequenz mit aufeinanderfolgender Zeitbereichswiederholung trägt, wobei die eindeutige Sequenz angepasst ist, um Kontrollinformationen zu identifizieren, die mindestens eine von einer Zellen-ID und einer Strahl-ID der Basisstation (101) aufweisend, **dadurch gekennzeichnet, dass** die eindeutige Sequenz eine Länge von N/n Zeitbereichsabtastungen aufweist, wobei die eindeutige Sequenz n-mal in einem OFDM-Symbol wiederholt wird, wobei das eine OFDM-Symbol N Zeitbereichsabtastungen enthält und N und n positive ganze Zahlen sind; und wobei das UE (102) ferner aufweist:

einen Stufen-1-Signaldetektor (226), der angepasst ist, um eine Selbstkorrelation des Synchronisationssignals an verschiedenen Abtastpunkten mit N/n Zeitbereich-Abtastzeitabständen während eines Beobachtungsfensters durchzuführen und dadurch eine grobe Position des Synchronisationssignals und der eindeutigen Sequenz abzuleiten; und einen Stufen-2-Signaldetektor (227), der angepasst ist, um eine Kreuzkorrelation des Synchronisationssignals mit jeder Kandidatensequenz einer Vielzahl von Kandidatensequenzen bei Abtastinstanzen in der Nähe der groben Position durchzuführen und dadurch eine genauere Position des Synchronisationssignals und der eindeutigen Sequenz zu erfassen.

5.   UE nach Anspruch 4, bei dem die grobe Position durch ein Korrelationsergebnis bestimmbar ist, das höher als ein vordefinierter Schwellenwert ist.

6.   UE nach Anspruch 4, bei dem die genauere Position und die eindeutige Sequenz bei einem maximalen Korrelationsergebnis zwischen allen Kandidatensequenzen nachweisbar sind.


**Revendications**

1.   Méthode, comprenant les étapes consistant à :

recevoir (701) un signal de synchronisation de domaine temporel émis à partir d'une station de base (101) par un équipement d'utilisateur, EU, (102) dans un réseau de communication mobile (100), dans lequel une pluralité de faisceaux de commande est configurée pour couvrir une zone de service entière d'une cellule pour transmettre le signal de synchronisation, dans lequel le signal de synchronisation porte une séquence unique avec une répétition de domaine temporel consécutive, dans lequel la séquence unique identifie des informations de commande comprenant au moins un identifiant, ID, de cellule et un ID de faisceau de la station de base (101), **caractérisé par** la séquence unique ayant une longueur de N/n échantillons de domaine temporel, la séquence unique étant répétée n fois dans un symbole OFDM, le symbole OFDM contenant N échantillons de domaine temporel, et N et n étant des entiers positifs ; et la méthode comprenant en outre les étapes consistant à :

effectuer (702) une détection de signal d'étage 1 en auto-corrélant le signal de synchronisation en différents points d'échantillonnage avec une distance temporelle de N/n échantillons de domaine temporel pendant une fenêtre d'observation et en déduisant un emplacement approximatif du signal de synchronisation et de la séquence unique ; et effectuer (703) une détection de signal d'étage 2 en corrélant de manière croisée le signal de synchronisation avec chaque séquence candidate d'une pluralité de séquences candidates dans des instances d'échantillonnage proches de l'emplacement approximatif et en détectant ainsi un emplacement précis du signal de synchronisation et de la séquence unique.

**2.** Méthode selon la revendication 1, dans laquelle l'emplacement approximatif est déterminé lorsqu'un résultat de corrélation est supérieur à un seuil prédéfini.

**3.** Méthode selon la revendication 1, dans laquelle l'emplacement précis et la séquence unique sont détectées lorsqu'un résultat de corrélation maximum est obtenu parmi toutes les séquences candidates.

**4.** Equipement utilisateur, EU, (102), comprenant :

un récepteur (211) adapté pour recevoir un signal de synchronisation de domaine temporel émis à partir d'une station de base (101) dans un réseau de communication mobile (100), dans lequel une pluralité de faisceaux de commande est configurée pour couvrir une zone de service entière d'une cellule pour transmettre le signal de synchronisation, dans lequel le signal de synchronisation porte une séquence unique avec une répétition de domaine temporel consécutive, la séquence unique étant adaptée pour identifier des informations de commande comprenant au moins un ID de cellule et un ID de faisceau de la station de base (101), **caractérisé par** la séquence unique ayant une longueur de N/n échantillons de domaine temporel, la séquence unique étant répétée n fois dans un symbole OFDM, le symbole OFDM contenant N échantillons de domaine temporel, et N et n étant des entiers positifs ; et l'EU (102) comprenant en outre :

un détecteur de signal d'étage 1 (226) qui est adapté pour effectuer une auto-corrélation du signal de synchronisation en différents points d'échantillonnage avec une distance temporelle de N/n échantillons de domaine temporel au cours d'une fenêtre d'observation, afin de déduire ainsi un emplacement approximatif du signal de synchronisation et de la séquence unique ; et un détecteur de signal d'étage 2 (227) qui est adapté pour effectuer une corrélation croisée du signal de synchronisation avec chaque séquence candidate d'une pluralité de séquences candidates dans des instances d'échantillonnage proches de l'emplacement approximatif et détecter ainsi un emplacement précis du signal de synchronisation et de la séquence unique.

**5.** EU selon la revendication 4, dans lequel l'emplacement approximatif peut être déterminé par un résultat de corrélation supérieur à un seuil prédéfini.

**6.** EU selon la revendication 4, dans lequel l'emplacement précis et la séquence unique sont détectables à un résultat de corrélation maximum parmi toutes les séquences candidates.

DOWNLINK

UE 102

BS 101

110

APPLY TWO-STAGE
CELL SEARCH METHOD

SYNCHRONIZATION
SIGNAL

UNIQUE SEQUENCE
WITH TIME DOMAIN
REPETITION

1 FRAME 10ms

111

| 0 | 1 | 2 | 3 | 4 | 5 | 6 | 7 | 8 | 9 |

SUBFRAME

## FIG. 1

201

215

TWO-STAGE CELL SEARCH CIRCUIT
220

211
RF
TRANSMITTER
RECEIVER

221
SCANNING
CIRCUIT

225
CORRELATION
CIRCUIT

212
PROCESSOR

222
FFT

226
STAGE-1
DETECTOR

213
MEMORY

214
PROGRAMS

223
IFFT

227
STAGE-2
DETECTOR

## FIG. 2

UE 301

BS 302

ALLOCATING
CONTROL
RESOURCE ⟩ 311

SCANNING ⟩ 321

312

STAGE-1
ACQUISITION ⟩ 322

STAGE-2 FINE
SEARCHING ⟩ 323

## FIG. 3

10ms

400

| 0 | 1 | 2 | 3 | 4 | 5 | 6 | 7 | 8 | 9 |

SUBFRAME

$N_{SYM}$ms

TWO-STAGE

401

| 0 | 1 |

0      N/2-1      N-1

UNIQUE
SEQUENCE
$x_k$

402

LTE-LIKE

| 0 |

0            N-1

UNIQUE
SEQUENCE
$y_k$

SYNCHRONIZATION SIGNAL

$N_{SYM}$ DURATION OF AN OFDM
SYMBOL

## FIG. 4

501

RX DATA $r_k$ HAVING L SAMPLES

510

$r_k$ —→ ⊗ —→ $\hat{i} = \max\limits_{0 \le i \le L-(N/2)} \sum\limits_{k=i}^{i+(N/2)-1} r_k \, r_{k+(N/2-1)}^{*}$

$r_{k+(N/2-1)}$

## FIG. 5

501

RX DATA $r_k$ HAVING L SAMPLES

610

$r_{i+k}$ —→ ⊗ —→ $(\hat{i}_1, \hat{j}_1) = \max\limits_{j} \max\limits_{\hat{i}-M < i \le \hat{i}+M} \sum\limits_{k=0}^{(N/2)-1} r_{i+k} \, x_k^{(j)*}$

$x_k^{(j)}$

SEQUENCE
GENERATOR —620

## FIG. 6

START

RECEIVE A TIME-DOMAIN SYNCHRONIZATION SIGNAL TRANSMITTED FROM A BASE STATION BY A UE IN A MOBILE COMMUNICATION NETWORK. THE SYNCHRONIZATION SIGNAL CARRIES A UNIQUE SEQUENCE WITH CONSECUTIVE TIME-DOMAIN REPETITION — 701

PERFORM A STAGE-1 SIGNAL DETECTION BY SELF-CORRELATING THE SYNCHRONIZATION SIGNAL AND DERIVING A COARSE LOCATION OF THE SYNCHRONIZATION SIGNAL — 702

PERFORM A STAGE-2 SIGNAL DETECTION BY CROSS CORRELATING THE SYNCHRONIZATION SIGNAL WITH A CANDIDATE SEQUENCE BASED ON THE COARSE LOCATION AND THEREBY DETECTING A FINE LOCATION OF THE SYNCHRONIZATION SIGNAL AND THE UNIQUE SEQUENCE — 703

END

# FIG. 7

START

ALLOCATE RADIO RESOURCES BY A BASE STATION IN A MOBILE COMMUNICATION SYSTEM. THE RADIO RESOURCES ARE PERIODICALLY ALLOCATED FOR SYNCHRONIZATION SIGNAL TRANSMISSION — 801

TRANSMIT A SYNCHRONIZATION SIGNAL TO UES OVER THE ALLOCATED RADIO RESOURCES. THE SYNCHRONIZATION SIGNAL IS EMBEDDED WITH A UNIQUE SEQUENCE. THE UNIQUE SEQUENCE IS REPEATED FOR N TIMES AND INSERTED IN ONE OR MORE OFDM SYMBOLS IN TIME DOMAIN — 802

END

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006000091 A1
- EP 2410708 A2
- US 8134996 B2
- WO 2008024173 A2
- US 2008043882 A1
- US 2007025236 A1
- US 2009175394 A1
- US 2009268602 A1